# EUROPEAN PATENT SPECIFICATION

(11) **EP 2 851 339 B1**
(45) Date of publication and mention of the grant of the patent: **27.01.2021**
(21) Application number: 14185901.7
(22) Date of filing: 23.09.2014
(51) Int. Cl.: C01B 3/38

(54) **Modulable system for the generation of endogas**
Modulsystem für die Erzeugung von Endogas
Système modulable pour la production d'endogaz

(30) Priority: 23.09.2013 IT MI20131564
(43) Date of publication of application: 25.03.2015
(73) Proprietor: Nippon Gases Italia S.r.l, 20159 Milano (IT)
(72) Inventor: Rinaldi, Giulio, 20122 Milano (IT); di Pasquale, Nicola, 20122 Milano (IT)
(74) Representative: Petruzziello, Aldo

(56) References cited:
- EP-A1- 1 808 409
- WO-A1-00/27518
- GB-A- 792 827
- GB-A- 2 222 096
- GB-A- 2 466 554
- US-A- 4 869 730
- US-A- 5 828 582
- US-B1- 6 488 907

## Description

The present invention relates to a modulable system for the production of endogas (endothermic gas) for supplying a plurality of heat treatment furnaces.

More particularly the present invention relates to such a system capable of producing endogas with a constant volumetric composition (optimal composition) also at flow rates of feed reduced by up to 90% with respect to the nominal flow rate of said system.

Endogas is a gas mixture, also referred to as "endothermic mixture" or "controlled atmosphere", which is used both as protective atmosphere in heat and/or surface treatments of metals (in respect of oxidation), and as a mixture able to confer certain mechanical properties to the metal subjected to the treatment, for example in the surface carburisation of steel parts intended for mechanical members which have to combine resistance to fatigue with surface hardness and resistance to wear.

Said endogas is the result of an endothermic reaction of incomplete combustion between air and methane (or another hydrocarbon), performed with a lack of oxygen and in the absence of water/steam, to form reducing substances such as CO to the detriment of the CO₂ (reaction also indicated as COPx) and has typically the following optimal volumetric composition:
N₂=35-40% H₂=40-45% CO=20-22.5% CO₂=0.1-1.0%
where a final content of CH₄ around 0.5% in volume, or lower, is indication of a maximum conversion and of the substantial completion of the reaction.

The abovementioned optimal composition is currently the result of a reaction performed using specific catalysts based on nickel (i.e. hexahydrate nickel oxides, on an alumina substrate), with molar ratios between air and natural gas comprised between 2.25/1 and 2.75/1 and at a temperature comprised between 1000 and 1100°C, generally around 1050°C.

Said endogas is produced in special and appropriate systems known as "endogas generators", formed by a heating chamber which supplies heat to a catalytic reactor, placed in its interior, which is formed by one or two cylindrical retorts, in the form of a plain tube or U-shaped tube, containing the catalyst, followed by a heat exchanger, generally gas/water, for cooling the reaction products rapidly so as to prevent the reaction from proceeding further, forming CO₂ in high quantities to the detriment of CO. The endogas exits from said exchanger at a temperature generally below 150°C, preferably around 50-100°C.

Important for the purpose of dimensioning the abovementioned generator is the space velocity of the catalyst used, which defines the quantity of gas which passes per unit of time (Nmc/h) in relation to the volume of catalyst (litres) and is inversely proportional to the time the gas remains in the catalyst: this parameter allows calculation of the volume of catalyst necessary for having the maximum efficiency of conversion at the working temperature of the catalyst whereon the obtaining of the abovementioned optimal composition depends.

The activity of the nickel-based catalysts is not very high, in particularly the selectivity towards H₂ and CO is less than 100% and the space velocity (defined as the quantity of endogas produced with optimal composition in the unit of time by the unit of volume of catalyst) is less than 4000 h-1, i.e. less than 4 Nmc/h of endogas produced per litre of catalyst. Said catalyst is presented in the form of spheres and/or cubes of indicative diameter of 18 mm and side of 18-25 mm, with normally a diameter or side which does not exceed 40 mm in order to contain the load losses and have a sufficient active surface.

Once the volume of catalyst necessary for producing a certain hourly quantity of endogas has been defined, the diameter of the reactor (retort) is dimensioned as a result: generally this diameter in current endogas generators, which adopt one or two reaction retorts, is greater than 100 mm in order to limit the height development of the combustion chamber and provide a sufficient catalyst bed (catalyst volume).

Generators of endogas with three retorts are also available commercially but the diameter of each tube is in any case greater than 100 mm always in order to contain the height dimensions of the heating chamber (maximum height generally in the order of two metres).

The disadvantage of this type of endogas generator lies in the poor modulability of the flow rate when production is to be reduced a great deal with respect to the nominal one of dimensioning of the system: in fact when seeking to reduce the nominal capacity (nominal flow rate produced) by reducing the supply flow rate there is the risk of having a flow which does not come completely in contact with the catalyst since the mass of gas loses strength of penetration in the catalyst (lower velocity in the retort): in this way the catalytic power of the retort is not fully exploited so that the optimal composition of endogas is not obtained.

Moreover, since the reaction is endothermic, an excessive reduction in flow rate in the retort potentially exposes the catalyst to the risk of localised excess temperatures, with consequent early damaging.

In some known systems with one retort the flow rate is decreased without altering the optimal composition of the endogas by providing two bypass lines, one on the supply of the air/methane mixture and the other on the endogas produced. However this type of system provides for decreasing the flow rate at most by 30% because further decreases modify excessively the velocity and the composition, resulting in a system with low modulability in terms of productivity.

A further reduction in flow rate, for example around 50%, is achieved by some known systems, with one or two retorts, using a pump with variable velocity or making one single retort work instead of two: however reductions below 50% of the nominal flow rate are not currently foreseen without influencing the composition.

Since the composition of the endogas influences the performances of the metallurgical treatments it is important to maintain the abovementioned composition optimal throughout production of the same, also for much lower flow rates with respect to the nominal one of the system.

In order to seek to overcome this problem a modular system has been provided in the art formed by several generators mounted in parallel, each one provided with its own retort and supply pump, where a centralised automatic control system manages activation, deactivation or partialisation of the pumps in such a way that on the demand for a high flow rate several generators are activated, while at the request for a lower flow rate several generators are deactivated and/or the velocity reduced of the pump of one or more generators in order to cover the widest range possible of flow rates.

However this modular system of generators is found to be very costly as well as complex to manage.

Moreover in this type of generator of the prior art with one or two retorts, when the level of soiling of the catalyst (sooting) is high, the system has to be stopped in order to replace the retort or work at half the nominal capacity (in the case of two retorts), incurring the problems of composition expressed above.

The patent application GB 2 222 096 describes a combined system of steam reforming and partial oxidation which provides for a plurality of tubes in the form of tube bundle, containing an appropriate catalyst, which are fed by a single flow in input to said tube bundle having a pressure greater than 50 barG, without the possibility of excluding individually one or more of the tubes forming the tube bundle.

US 5 828 582 A discloses an endothermic gas generator, comprising: a heating chamber comprising heating means; retorts comprising a catalyst; distribution orifices; a single or two shell and tube heat exchangers per retort, the heat exchangers comprising water cooled tubes.

The object of the present invention is that of overcoming, at least in part, the disadvantages of the prior art by providing a generator of endogas capable of modulating in an improved manner the flow rate of endogas produced, guaranteeing at the same time the optimal composition of the endogas at any flow rate produced, also in the case wherein it is much lower with respect to the nominal flow rate of the generator.

A further object is that of providing such a generator which is inexpensive, easy to manage and which in the case of soiling of the catalyst can in any case produce endogas with optimal composition.

These objects are achieved by the endogas generator in accordance with the invention having the features listed in the annexed independent claim 1.

Advantageous embodiments of the invention are disclosed by the dependent claims.

An object of the present invention relates to a new endogas generator for the production of approximately 100 Nmc/h which can be dimensioned for production comprised between 50-200 Nmc/h, for feeding a plurality of heat treatment furnaces, said generator comprising
- an outer cylindrical heating chamber that supplies heat to a catalytic reactor contained inside said outer chamber, said reactor containing a noble metal oxide-based catalyst for the partial oxidation of a mixture of air-methane or another hydrocarbon;
- at least three catalyst tubes, parallel one to the other, arranged in the form of a tube bundle inside said catalytic reactor, each of said tubes having a nominal diameter equal to or smaller than 80 mm,
- at least one gas/air heat exchanger for the cooling of the produced endothermic gas mixture, said heat exchanger being in the form of a duct and placed outside of said outer chamber, said exchanger comprising at least one cooling tube, each cooling tube being in fluid communication with a respective catalyst tube,
said generator being characterised in that
said catalytic reactor being constituted of an inner chamber containing inside said catalyst tubes,
each catalyst tube is in fluid communication with a respective supply tube, external to said heating chamber, for supplying said catalyst tube with a flow (Qi) which is a portion of a predetermined nominal flow rate (Q_{N}) of said mixture of air and methane or another hydrocarbon,
each catalyst tube containing the catalyst only in one section with respect to the length of the catalyst tube contained in the heating chamber, so that the remaining empty section constitutes a heating chamber of the mixture of air and methane or another hydrocarbon,
said each supply tube being provided with a respective shut-off valve,
said shut-off valves being adapted to exclude singly said supply flow (Qi) of one or more of said supply tubes so as to obtain a smaller overall supply flow (Q) with respect to said nominal flow (Q_{N}), said overall flow (Q) being the sum of the flows (Qi) in input to each supply tube in operation;
and characterized in that said outer cylindrical chamber comprises internally a plurality of burners heating said inner chamber and placed in an opposite manner with respect to said inner cylindrical chamber and aligned vertically in such a way as to heat uniformly the entire outer surface of said inner chamber containing said catalyst tubes.

Endogas here refers to a gas mixture, also referred to as "endothermic mixture" or "controlled atmosphere" which is the result of an endothermic reaction of incomplete combustion between air and methane (or another hydrocarbon), with stoichiometric defect of oxygen and in the absence of water/steam, to form only reducing substances such as CO rather than CO₂ and has typically the following optimal volumetric composition: N₂=35-40%, H₂=40-45%, CO=20-22.5%, CO₂=0.1-1.0%, con CH₄ = 0.5% approximately.

Said mixture which does not contain water/steam among the initial and final components must not be identified with similar mixtures containing water/steam and deriving from steam reforming processes.

The distinctive characteristic of the present system with respect to known ones which produce endogas lies therefore in the fact that each catalyst tube, which has a respective supply tube which can be selected and preferably a respective finned cooling tube, represents an autonomous endogas generator which is independent of the functioning of the other catalyst tubes mounted in parallel and contained in the present system: thanks to the valves which can be selected it is possible to supply or not to supply each catalyst tube while maintaining it in the operating position, i.e. not removing it from the system, adjusting therefore the number of the catalyst tubes in operation as a function of the flow rate of endogas required in output. In this way, also when the overall flow rate is lower than the nominal one of the generator, it is possible to have in each catalyst tube the same optimal velocity of the flow as that at the nominal flow rate Qn.

To sum up, the generator is composed of a plurality of catalyst tubes, arranged in the form of tube bundle and inserted in the outer heating chamber where each catalyst tube constitutes an element independent of the other catalyst tubes. Each catalyst tube is in fact combined with a corresponding gas/air heat exchanger module, composed of one or more cooling tubes: using the same heating chamber, the same fan and the same cooling air supply duct a series of submodules of endogas generation are therefore formed, each one composed of a catalyst tube and cooling tube(s). Each module, if connected via the shut-off valve(s), contributes to achieving the overall Q.

The catalysts used here are those based on oxides of noble metals (platinum, gold, silver, rhodium, iridium, palladium, osmium, ruthenium) provided for the processes of partial catalytic oxidation which have a high catalytic efficiency (conversion around 100%) and are provided with space velocities generally greater than 4,000 h⁻¹, preferably equal to or greater than 10,000 h⁻¹, more preferably in the order of at least 15,000 h⁻¹, such as for example those based on rhenium or rhodium, palladium, platinum or mixtures thereof in quantities generally from 0.1% to 10% by weight, and with substrate.

An example of these catalysts is represented by a catalyst based on rhenium, in a quantity between 0.1% to 10% by weight, containing also a second noble metal selected from platinum, rhodium, iridium, ruthenium and palladium, with an alumina substrate.

The distinctive features of the present generator with respect to known ones are many.

In the first place the use of new catalysts provided with higher space velocity entails the use of a smaller quantity of catalyst on an equal endogas produced, thanks to the greater surface activity, restricting therefore the system dimensions with respect to known ones on a par with endogas produced. Secondly, it is possible to reduce the diameter of the retort without exceeding in height thanks to the fact that a number of retorts are provided such as to form a tube bundle of retorts with reduced diameter.

Since the tubes of the retorts of the present system have a reduced section, the reaction between methane (or another hydrocarbon) and air takes place homogeneously in the entire horizontal section of the tube since in said section there is no temperature gradient: in fact the Applicant has found that with tubes having a nominal diameter equal to or smaller than 80 mm the temperature gradient between tube interior and tube exterior is practically zero and the temperature in the centre of the tube (core) is more aligned with the temperature in proximity of the surface of the tube exposed to the flames of the burner. This necessarily determines a greater uniformity of temperature along the entire catalyst bed, also at low flow rates, and this allows a uniform composition to be obtained more easily along the entire bed, obtaining an endogas with optimal composition also at low flow rates with respect to the nominal one.

The molar ratios between air and methane (or another hydrocarbon) used here are preferably comprised between 2.25/1 and 2.75/1, and the temperature of reaction is comprised between 1000 and 1100°C, generally around 1050°C.

It is to be understood that in the present system it is possible to replace the ambient air with oxygen in a mixture with other gases or with air enriched with oxygen or with pure oxygen, without thereby departing from the scope of the present invention.

It should be noted that in each tube the catalyst occupies only one section with respect to the length of the catalyst tube contained in the heating chamber, so that the remaining empty section constitutes a heating chamber of the mixture of air and methane (or another hydrocarbon): in view of the reduced diameter of the abovementioned tubes, the mixture of air and methane (or another hydrocarbon) succeeds in heating rapidly in the empty section of each catalyst tube, entering therefore in the catalyst section advantageously already at the temperature of reaction with an evident advantage of yield.

Further features of the invention will be made clearer by the following detailed description, referred to a purely non-limiting example thereof, illustrated in the accompanying drawings in which:
Figure 1 is a sectioned view from above of the generator of the present invention complete with control and electrical panel;
Figure 2 is a front view of a vertical section taken along line II-II of Fig. 1;
Figure 3 is the view of a transverse vertical section taken along line III-III of Fig. 1.

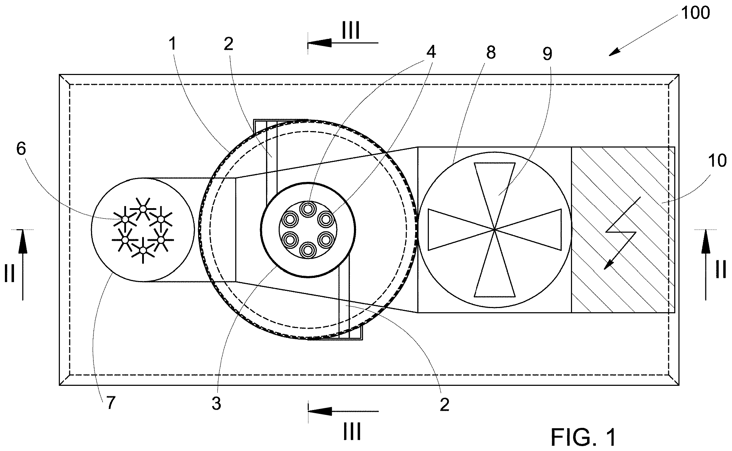

Figure 1 illustrates an endogas generator, denoted overall by reference numeral 100.

It comprises an outer cylindrical heating chamber 1, appropriately insulated (for example by means of the use of refractory material) in whose interior a plurality of burners 2 are placed, which burners heat a cylindrical chamber 3, placed inside the outer chamber 1, by direct contact with the flame of each burner placed tangentially with respect to said cylindrical chamber 3 (Fig. 1).

Inside said inner cylindrical chamber 3 a plurality of catalyst tubes or retorts 4 are placed, which are not in fluid communication one with the other. Said retorts are preferably in a number greater than three.

Said inner chamber 3 and said catalyst tubes 4 constitute together the actual catalytic reactor contained inside the outer heating chamber 1.

In this generator 100 in accordance with the present invention there is no direct contact between the flame (heating) which licks the inner chamber 3 and the gases which react inside the catalyst tubes 4, which are therefore heated through convection and irradiation.

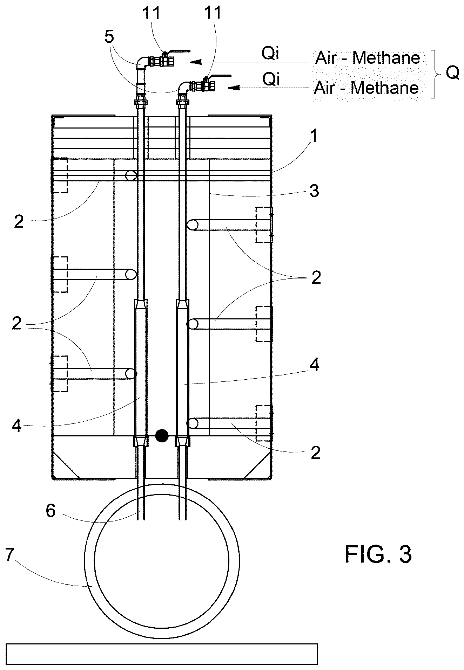

The burners 2 are generally placed in an opposing manner with respect to said inner cylindrical chamber 3 so as to form two groups of burners 2, each group of said burners 2 providing a series of burners 2 aligned vertically one with the other (Fig. 3): this arrangement allows the entire outer surface of said inner chamber 3 containing said retorts 4 to be heated uniformly.

Each of said burners 2 can be supplied separately and independently; or said burners 2 can be supplied in groups through one or more manifolds (not illustrated in the drawings): in this way it is possible to modulate the heating according to the number of catalyst tubes 4 supplied and therefore as a function of the overall flow rate in operation.

It is understood that it is possible to provide for the use also of only one burner 2 without thereby departing from the scope of the present invention.

Said tubular catalytic reactors or retorts 4 have, each one, a nominal diameter equal to or smaller than 80 mm, preferably around 50-60 mm.

In the drawings said retorts 4 are in a total number of six, even if this is not binding for the purpose of the present invention.

Each catalytic reactor 4 is filled partially with an appropriate quantity of a specific noble metal oxide-based catalyst for endogas.

This type of catalyst, more active with respect to the nickel-based ones, allows a higher space velocity (in terms of hourly catalyst volume/gas flow rate), generally higher than 4,000 h⁻¹, preferably equal to or greater than 10,000 h⁻¹, more preferably in the order of at least 15,000 h⁻¹ (or at least 15 Nmc/h of reformed gas per litre of catalyst). In this case the shape thereof is normally in spheres of small diameter comprised between 2.5 and 5 mm, so as to have a high specific surface and low load losses.

Said six catalyst tubes 4 of nominal diameter equal to or less than 80 mm, preferably around 50-60 mm, are placed inside the inner chamber 3 in a substantially circular manner in the form of a tube bundle so as to be all irradiated by the inner chamber 3 in a homogeneous manner one in relation to the other, during their simultaneous supply.

In this way, the reaction between methane (or another hydrocarbon) and air can take place in a more homogeneous manner through the entire flow passage section of the catalyst tube 4 since the core temperature is more aligned with the temperature in proximity of the surface of the catalyst tube 4 seeing that the present tubes or retorts 4 have a smaller section with respect to known reactors.

Each of said tubes or retorts 4 is in fluid communication with a respective supply tube 5 which is provided with a respective shut-off valve 11 for allowing to enter or not to enter a portion Qi of the overall flow Q (volumetric flow rate) of the mixture of air and methane (or another hydrocarbon) which was preset as supply flow to the present generator.

Said catalyst tubes or retorts 4 can therefore be supplied, each one, singly by the corresponding supply tube 5, or be supplied in parallel in groups, through the supply of one or more distributors or manifolds (not illustrated in the drawings) placed upstream of said supply tubes 5.

It should be noted that in the present tube bundle system where the overall feed flow Q is the sum of the flows Qi entering each supply tube 5, the reduction in the overall flow rate by means of the exclusion of one or more tubes ensure that the optimal velocity in each of the remaining catalyst tubes 4 remains unaltered.

In practice, the shut-off valves 11 excluding singly one or more of said supply tubes 5 ensure that there is, in operation, an overall flow Q supplying the generator which is lower with respect to the nominal flow Q_{N} for which the generator was dimensioned, said overall flow Q, in operation, being the sum of the flows Qi in input to each supply tube 5 which is in operation.

One or more supply pumps (not illustrated in the drawings) will then go to supply the supply tubes 5 and/or the respective manifolds, if present, according to methods in themselves known.

Advantageously, upstream of the supply pipes 5, a distributor of the input mixture of air and methane (or another hydrocarbon) can also be provided including a plurality of shut-off valves in order to be able to exclude singly or in pairs the catalyst tubes 4, so as to partialise the flow of gas without varying significantly the gas passage velocity on the catalyst with respect to the nominal gas flow.

This system with six tubes or retorts is therefore capable of producing endogas with constant optimal composition also at supply flow rates reduced by 90% with respect to the nominal flow rate, advantageously comprised within the range of 50-200 Nmc/h.

The manufacture of a partial oxidation catalytic reactor by means of the use of a plurality of catalyst tubes 4 of small diameter, placed in parallel one in relation to the other in the manner of a tube bundle inside a heating chamber, and which can be selected singly, allows moreover advantageously the excluding of one or more catalyst tubes 4 which were found to be non-performing in terms of composition of the gas produced, without jeopardising significantly the produced total flow rate (reduction by approximately 30% in the nominal flow rate normally acceptable also in known systems with one retort).

Also the exclusion of four of the six catalyst tubes 4 allows the obtaining of an optimal composition of the endogas with a flow rate reduced by 67% with respect to the nominal flow rate, reduction which normally cannot be obtained in the art with the systems with one or two retorts.

A control of the working conditions of each catalyst tube 4 can be carried out by means of the control of the supply pressure, whose value depends on the load losses of the system and consequently on the level of soiling (sooting) of the catalyst.

Moreover, since the generator has several reaction tubes 4 as available, it is possible to replace only those reaction tubes which were to be found to be damaged, reducing maintenance costs.

The gas produced by each catalyst tube 4 is then cooled by means of at least one gas/air heat exchanger 7 whose construction allows the gas flows exiting from the catalyst tubes 4 to be maintained independent one from the other.

Said heat exchanger 7 is in the form of a duct and is placed outside of the outer chamber 1: it contains internally a plurality of cooling tubes 6, of the finned type, each one in fluid communication with the relative catalytic reactor 4; or said heat exchanger 7 can contain only one finned tube 6 associated with a respective catalyst tube 4 so that the number of exchangers 7 is equal to the number of catalyst tubes 4 provided in the present system.

In one embodiment, the six finned tubes 6 are all placed inside a first duct 7 placed outside of the outer chamber 1, which is connected to a second duct 8 wherefrom the air necessary for the cooling of said finned tubes 6 enters.

It is also possible to group together the six finned tubes 6 in three gas/air heat exchangers 7 (and therefore in three ducts 8), parallel one to the other, each exchanger 7 serving a pair of reaction tubes 4. This arrangement is particularly advantageous in conditions of operation with partial regimes, since it is possible to exclude one of the exchangers, improving the energy specific consumption.

It is moreover also possible to provide for several exchangers 7 to be supplied, in parallel, by a flow of cooling air which flows inside a single second duct 8.

The present generator 100 also provides an electrical panel 10 on board machine for the electrical supply of the electric machines necessary for its functioning (fan 9, pumps, etc.).

The fan 9 is a fan with high flow rate (> 10000 mc/h) which moves the air in the duct 8 cooling the produced gases as soon as they leave the catalyst situated in the lower part of the heating chamber 1.

The function of the pipe bundle is not therefore only that of increasing the efficiency of the system by increasing the reaction or exchange surfaces, but instead to have a generator whose total flow rate is the result of a series of independent tubes, each one of which makes its own contribution to achieving the total flow rate.

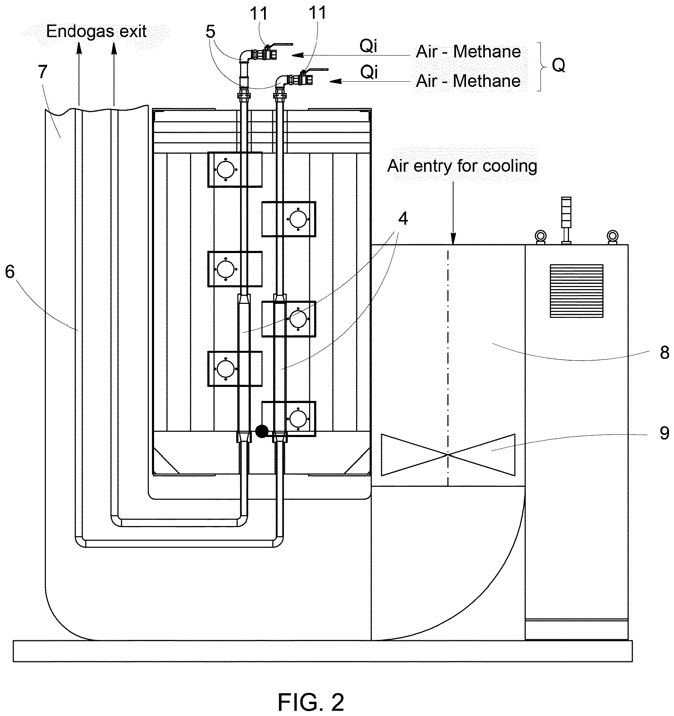

Since said generator is the outcome of a series of submodules (six in the case of Figs. 1-3 wherein there are six catalyst tubes 4 and six respective finned tubes 6) by varying the number thereof, and adjusting the heating and cooling section, it is possible to obtain amounts comprised within the range of 50-200 Nmc/h of endogas produced by varying the number of catalyst tubes 4 and of corresponding tube rows in the exchanger for the cooling 7.

Given that each catalyst tube 4 is dimensioned in order to produce advantageously 15 - 20 mc/h of endogas, the 100 mc/h system provides 6 modules and a 200 mc/h system 12. Likewise the number of tube rows of the exchanger is directly linked to the number of catalyst tubes.

It should be noted that in known endogas generators the cooling is performed advantageously with water and not with air: in the present system it is possible to use air, rather than water, in an efficient manner thanks to the use of finned tubes with much smaller diameter with respect to those of the exchangers of the known systems, so that the cooling exchange is good.

Unlike the known solutions, the type of construction in accordance with the present invention allows the cooling of the produced endogas immediately at the exit from the heating chamber without the interposition of additional components which would limit the efficiency of the system.

In this specific embodiment described above referring to the drawings, the endogas generator is a system of the TOP-DOWN type, i.e. with the supply of the mixture of air and methane (or another hydrocarbon) which enters from the top of the reactor 100 and the endogas which exits from the bottom of the reactor 100: it is however understood that this embodiment does not limit the scope of the present invention and that use could be made of a supply of the mixture of air and methane (or another hydrocarbon) from below and of an exit of the endogas from above, without thereby departing from the scope of the present invention.

It should be noted moreover that the air-gas cooling in the present system has been illustrated as co-current even if however it could be performed as counter-current without thereby departing from the spirit of the present invention.

The endothermic mixture produced by the present generator is used both as protective atmosphere in heat and/or surface treatments of metals (in respect of oxidation) and as a mixture able to confer certain mechanical properties to the metal subjected to the treatment, for example in the surface carburisation of parts in steel intended for mechanical members which have to combine resistance to fatigue with surface hardness and resistance to wear.

The present invention is not limited to the particular embodiments previously described and illustrated in the accompanying drawings, but numerous detailed changes may be made thereto, within the reach of the person skilled in the art, without thereby departing from the scope of the invention itself as defined in the appended claims.

## Claims

1. Generator (100) for producing an endothermic gas mixture by means of a reaction of incomplete combustion of a gaseous mixture of air and methane or another hydrocarbon, in stoichiometric defect of oxygen and without water/steam,
said generator (100) comprising
- an outer cylindrical heating chamber (1) that supplies heat to a catalytic reactor contained inside said outer chamber (1), said reactor containing a noble metal oxide-based catalyst for the partial oxidation of a mixture of air-methane or another hydrocarbon;
- at least three catalyst tubes (4), parallel one to the other, arranged in the form of a tube bundle inside said catalytic reactor, each of said tubes (4) having a nominal diameter equal to or smaller than 80 mm,
- at least one gas/air heat exchanger (7) for the cooling of the produced endothermic gas mixture, said heat exchanger (7) being in the form of a duct and placed outside of said outer chamber (1), said exchanger (7) comprising at least one cooling tube (6), each cooling tube (6) being in fluid communication with a respective catalyst tube (4),
said generator being **characterised in that**
said catalytic reactor being constituted of an inner chamber (3) containing inside said catalyst tubes (4),
each catalyst tube (4) is in fluid communication with a respective supply tube (5), external to said heating chamber (1), for supplying said catalyst tube (4) with a flow (Qi) which is a portion of a predetermined nominal flow rate (Q_{N}) of said mixture of air and methane or another hydrocarbon,
each catalyst tube (4) containing the catalyst only in one section with respect to the length of the catalyst tube contained in the heating chamber (1), so that the remaining empty section constitutes a heating chamber of the mixture of air and methane or another hydrocarbon,
said each supply tube (5) being provided with a respective shut-off valve (11),
said shut-off valves (11) being adapted to exclude singly said supply flow (Qi) of one or more of said supply tubes (5) so as to obtain a smaller overall supply flow (Q) with respect to said nominal flow (Q_{N}), said overall flow (Q) being the sum of the flows (Qi) in input to each supply tube (5) in operation;
and **characterized in that** said outer cylindrical chamber (1) comprises internally a plurality of burners (2) heating said inner chamber (3) and placed in an opposite manner with respect to said inner cylindrical chamber (3) and aligned vertically in such a way as to heat uniformly the entire outer surface of said inner chamber (3) containing said catalyst tubes (4).

2. Generator (100) according to claim 1 wherein upstream said supply tubes (5) of said catalyst tubes (4) one distributor is provided.

3. Generator according to claim 1 or 2 wherein said gas/air heat exchanger (7) is constituted by at least one duct inside whereof a plurality of cooling tubes (6) are placed, parallel one to the other and in a number equal to the number of said catalyst tubes (4).

4. Generator according to claim 1 or 2 wherein said heat exchanger (7) contains only one cooling tube (6) associated with a respective catalyst tube (4) so that the number of exchangers 7 is equal to the number of said catalyst tubes (4).

5. Generator (100) according to claim 3 or 4, further comprising at least one duct (8) for the input of air for the cooling of said endothermic gas, said duct (8) being in fluid communication with said gas/air heat exchangers (7).

6. Generator (100) according to any one of the preceding claims further comprising means (9) for the movement of the cooling air.

7. Generator according to claim 6 wherein said means (9) for the movement of the cooling air are in the form of a fan.

8. Generator (100) according to any one of the preceding claims wherein the catalyst used is based on rhenium containing also a second noble metal selected from platinum, rhodium, iridium, ruthenium and palladium, supported on alumina.

9. Process for generating endothermic gas by means of partial oxidation, in stoichiometric defect of oxygen and in the absence of water/steam, of a mixture of air-methane or another hydrocarbon in the presence of a catalyst for partial oxidation based on noble metal oxides, having a space velocity greater than 4000 h⁻¹,
said process comprising the supply of a mixture of air and methane or another hydrocarbon, in stoichiometric defect of oxygen and in the absence of water/steam, to a catalytic reactor constituted by at least three catalyst tubes (4), each one provided with a respective supply tube (5) whereon there is a respective shut-off valve (11), said catalytic reactor being contained in a generator (100) as defined in any one of the preceding claims.

## Patentansprüche

1. Generator (100) zur Erzeugung eines endothermen Gasgemischs mit Hilfe einer unvollständigen Verbrennungsreaktion von einem gasförmigen Gemisch aus Luft und Methan oder einem anderen Kohlenwasserstoff, in stöchiometrischem Sauerstoffmangel und ohne Wasser/Dampf,
wobei der Generator (100) umfasst:
- eine äußere zylindrische Heizkammer (1), die einem katalytischen Reaktor, der innerhalb der äußeren Kammer (1) enthalten ist, Wärme zuführt, wobei der Reaktor einen Edelmetalloxid-basierten Katalysator für die partielle Oxidation eines Gemischs aus Luft-Methan oder einem anderen Kohlenwasserstoff enthält;
- mindestens drei Katalysatorrohre (4), die parallel zueinander in Form eines Rohrbündels im Inneren des katalytischen Reaktors angeordnet sind, wobei jedes der Rohre (4) einen nominalen Durchmesser von gleich oder kleiner als 80 mm aufweist,
- mindestens einen Gas/Luft-Wärmeaustauscher (7) zum Kühlen des erzeugten endothermen Gasgemischs, wobei der Wärmeaustauscher (7) in Form eines Kanals vorliegt und außerhalb der äußeren Kammer (1) positioniert ist, wobei der Austauscher (7) mindestens ein Kühlrohr (6) umfasst, wobei jedes Kühlrohr (6) in flüssiger Verbindung mit einem jeweiligen Katalysatorrohr (4) steht,
wobei der Generator **dadurch gekennzeichnet ist, dass**
sich der katalytische Reaktor aus einer inneren Kammer (3) zusammensetzt, die im Inneren die Katalysatorrohre (4) enthält,
jedes Katalysatorrohr (4) in flüssiger Verbindung mit einem jeweiligen Zufuhrrohr (5) steht, das sich außerhalb der Heizkammer (1) befindet, zur Beschickung des Katalysatorrohrs (4) mit einem Strom (Qi), der ein Teil einer zuvor bestimmten nominalen Flussrate (Q_{N}) des Gemischs aus Luft und Methan oder eines anderen Kohlenwasserstoffs ist,
jedes Katalysatorrohr (4) den Katalysator nur in einem Abschnitt in Bezug auf die Länge des in der Heizkammer (1) enthaltenden Katalysatorrohrs enthält, so dass der verbleibende leere Abschnitt eine Erhitzungskammer des Gemischs aus Luft und Methan oder eines anderen Kohlenwasserstoffs darstellt,
jedes Zufuhrrohr (5) mit einem jeweiligen Absperrventil (11) versehen ist,
das Absperrventil (11) darauf angepasst ist, einzig den Zufuhrstrom (Qi) aus einem oder mehreren der Zufuhrrohre (5) auszuschließen, um einen geringeren Gesamtzufuhrstrom (Q) mit Bezug zu dem nominalen Strom (Q_{N}) zu erhalten, wobei der Gesamtstrom (Q) die Summe aus den Strömen (Qi) im Eingang in jedes in Betrieb befindliches Zufuhrrohr (5) ist;
und **dadurch gekennzeichnet dass** die äußere zylindrische Kammer (1) im Inneren eine Mehrzahl von Brennern (2) umfasst, die die innere Kammer (3) erhitzen und in einer gegenüberliegenden Weise mit Bezug zu der inneren zylindrischen Kammer (3) positioniert sind und senkrecht in solcher Weise angeordnet sind, dass die gesamte äußere Oberfläche der inneren Kammer (3), die die Katalysatorrohre (4) enthält, gleichmäßig erhitzt wird.

2. Generator (100) gemäß Anspruch 1, wobei stromaufwärts der Zufuhrrohre (5) der Katalysatorrohre (4) ein Verteiler angebracht ist.

3. Generator gemäß Anspruch 1 oder 2, wobei der Gas/Luft-Wärmeaustauscher (7) aus mindestens einem Kanal im Inneren besteht, worin eine Mehrzahl von Kühlrohren (6) parallel zueinander und in einer Anzahl gleich der Zahl der Katalysatorrohre (4) angeordnet sind.

4. Generator gemäß Anspruch 1 oder 2, wobei der Wärmeaustauscher (7) lediglich ein Kühlrohr (6) in Verbindung mit einem jeweiligen Katalysatorrohr (4) enthält, sodass die Anzahl der Austauscher (7) gleich der Anzahl der Katalysatorrohre (4) ist.

5. Generator (100) gemäß Anspruch 3 oder 4, außerdem umfassend mindestens einen Kanal (8) für den Zugang von Luft zum Kühlen des endothermen Gases, wobei der Kanal (8) in flüssiger Verbindung mit den Gas/Luft-Wärmeaustauschern (7) steht.

6. Generator (100) gemäß einem der vorangehenden Ansprüche, außerdem umfassend Vorrichtungen (9) zur Bewegung der Kühlluft.

7. Generator gemäß Anspruch 6, wobei die Vorrichtungen (9) zur Bewegung der Kühlluft in Form eines Ventilators vorliegen.

8. Generator (100) gemäß einem der vorangehenden Ansprüche, wobei der verwendete Katalysator auf Rhenium basiert, der auch ein zweites Edelmetall, ausgewählt aus Platin, Rhodium, Iridium, Ruthenium und Palladium, aufgebracht auf Aluminiumoxid, enthält.

9. Verfahren zur Erzeugung von endothermem Gas mit Hilfe von partieller Oxidation, in stöchiometrischem Sauerstoffmangel und in Abwesenheit von Wasser/Dampf, aus einem Gemisch von Luft-Methan oder einem anderen Kohlenwasserstoff, in Gegenwart eines Katalysators für die partielle Oxidation, basierend auf Edelmetalloxiden, mit einer Raumgeschwindigkeit von größer 4000 h⁻¹,
wobei das Verfahren die Zufuhr eines Gemischs aus Luft und Methan oder eines anderen Kohlenwasserstoffs, in stöchiometrischem Sauerstoffmangel und in Abwesenheit von Wasser/Dampf, zu einem katalytischen Reaktor, zusammengesetzt aus mindestens drei Katalysatorrohren (4), umfasst, wobei jedes mit einem jeweiligen Zufuhrrohr (5) versehen ist, woran sich ein jeweiliges Absperrventil (11) befindet, wobei der katalytische Reaktor in einem Generator (100) enthalten ist, wie in jedem der vorangehenden Ansprüche definiert.

## Revendications

1. Générateur (100) de production d'un mélange de gaz endothermique au moyen d'une réaction de combustion incomplète d'un mélange gazeux d'air et de méthane ou d'un autre hydrocarbure, en défaut stœchiométrique d'oxygène et sans eau/vapeur,
ledit générateur (100) comprenant
- une chambre de chauffage cylindrique externe (1) qui approvisionne de la chaleur à un réacteur catalytique contenu à l'intérieur de ladite chambre externe (1), ledit réacteur contenant un catalyseur à base d'oxyde de métal noble pour l'oxydation partielle d'un mélange air-méthane ou d'un autre hydrocarbure ;
- au moins trois tubes de catalyseur (4), parallèles l'un à l'autre, disposés sous la forme d'un faisceau de tubes à l'intérieur dudit réacteur catalytique, chacun desdits tubes (4) ayant un diamètre nominal inférieur ou égal à 80 mm ;
- au moins un échangeur de chaleur gaz/air (7) pour le refroidissement du mélange de gaz endothermique produit, ledit échangeur de chaleur (7) étant sous la forme d'un conduit et placé à l'extérieur de ladite chambre externe (1), ledit échangeur (7) comprenant au moins un tube de refroidissement (6), chaque tube de refroidissement (6) étant en communication fluide avec un tube de catalyseur (4) respectif,
ledit générateur étant **caractérisé en ce que**
ledit réacteur catalytique étant constitué d'une chambre interne (3) contenant à l'intérieur lesdits tubes de catalyseur (4),
chaque tube de catalyseur (4) est en communication fluide avec un tube d'approvisionnement (5) respectif, externe à ladite chambre de chauffage (1), pour approvisionner ledit tube de catalyseur (4) avec un écoulement (Qi) qui est une partie d'un débit nominal prédéterminé (Q_{N}) dudit mélange d'air et de méthane ou d'un autre hydrocarbure,
chaque tube de catalyseur (4) contenant le catalyseur seulement dans une section par rapport à la longueur du tube de catalyseur contenu dans la chambre de chauffage (1), de sorte que la section vide restante constitue une chambre de chauffage du mélange d'air et de méthane ou d'un autre hydrocarbure,
ledit chaque tube d'approvisionnement (5) étant fourni avec une vanne de fermeture (11),
lesdites vannes de fermeture (11) étant adaptées pour exclure ledit simplement écoulement d'approvisionnement (Qi) d'un ou de plusieurs des tubes d'approvisionnement (5) de manière à obtenir un écoulement d'approvisionnement global plus petit (Q) par rapport audit écoulement nominal (Q_{N}), ledit écoulement global (Q) étant la somme des écoulements (Qi) dans l'entrée à chaque tube d'approvisionnement (5) en fonctionnement ;
et **caractérisé en ce que** ladite chambre cylindrique externe (1) comprend de manière interne une pluralité de brûleurs (2) chauffant ladite chambre interne (3) et placés de manière opposée par rapport à ladite chambre cylindrique interne (3) et alignés verticalement de manière à chauffer uniformément la surface externe entière de ladite chambre interne (3) contenant lesdits tubes de catalyseur (4).

2. Générateur (100) selon la revendication 1 dans lequel en amont desdits tubes d'approvisionnement (5) desdits tubes de catalyseur (4) un distributeur est fourni.

3. Générateur selon la revendication 1 ou 2 dans lequel ledit échangeur de chaleur gaz/air (7) est constitué par au moins un conduit à l'intérieur où une pluralité de tubes de refroidissement (6) sont placés, parallèles l'un à l'autre et en nombre égal au nombre desdits tubes de catalyseur (4).

4. Générateur selon la revendication 1 ou 2 dans lequel ledit échangeur de chaleur (7) contient seulement un tube de refroidissement (6) associé avec un tube de catalyseur (4) respectif de sorte que le nombre d'échangeurs 7 est égal au nombre desdits tubes de catalyseur (4).

5. Générateur (100) selon la revendication 3 ou 4, comprenant en outre au moins un conduit (8) pour l'entrée d'air pour le refroidissement dudit gaz endothermique, ledit conduit (8) étant en communication fluide avec lesdits échangeurs de chaleur gaz/air (7).

6. Générateur (100) selon l'une quelconque des revendications précédentes comprenant en outre des moyens (9) pour le mouvement de l'air de refroidissement.

7. Générateur selon la revendication 6 dans lequel lesdits moyens (9) pour le mouvement de l'air de refroidissement sont sous la forme d'un ventilateur.

8. Générateur (100) selon l'une quelconque des revendications précédentes dans lequel le catalyseur utilisé est basé sur du rhénium contenant aussi un second métal noble choisi parmi le platine, le rhodium, l'iridium, le ruthénium et le palladium, supportés sur de l'alumine.

9. Procédé de production d'un gaz endothermique au moyen d'une oxydation partielle, en défaut stœchiométrique d'oxygène et en absence d'eau/vapeur, d'un mélange d'air-méthane ou d'un autre hydrocarbure en présence d'un catalyseur pour l'oxydation partielle basée sur les oxydes de métal noble, ayant une vitesse spatiale supérieure à 4000 h⁻¹,
ledit procédé comprenant l'approvisionnement d'un mélange d'air et de méthane ou d'un autre hydrocarbure, en défaut stœchiométrique d'oxygène et en absence d'eau/vapeur, à un réacteur catalytique constitué par au moins trois tubes de catalyseur (4), chacun fourni avec un tube d'approvisionnement (5) respectif où il y a une vanne de fermeture (11) respective, ledit réacteur catalytique étant contenu dans un générateur (100) tel que défini dans l'une quelconque des revendications précédentes.
